# EUROPEAN PATENT APPLICATION

(11) **EP 0 752 228 A1**
(43) Date of publication of application: **08.01.1997**
(21) Application number: 96500085.4
(22) Date of filing: 24.06.1996
(51) Int. Cl.: A47J 37/04

(54) **Oven with turning drum**

(30) Priority: 07.07.1995 GB 9513836
(71) Applicant: Sebastia Conesa, Carlos, 08912 Badalona, Barcelona (ES); Sebastia Conesa, Javier, 08912 Badalona, Barcelona (ES)
(72) Inventor: Sebastia Conesa, Carlos, 08912 Badalona, Barcelona (ES); Sebastia Conesa, Javier, 08912 Badalona, Barcelona (ES)
(74) Representative: Perez Bonal, Bernardo

(57) **Abstract**

It consists of an oven that incorporates a turning drum (1) actuated through a transmission mechanism that present a single thread coplanar spiral shaped lateral section tubular configuration defining a gap (4) through which foodstuffs are loaded and unloaded, being defined for a drum turning direction the heating operation in which the foodstuffs are uniformly heated without leaving the drum and the unload situation in the opposite turning direction.

The oven incorporates loading (7) and unloading (8) openings that enter into alignment with the drum gap in the corresponding foodstuffs filling and emptying situations, not being it necessary to gain access to the oven through its door for anything other than cleaning operations.

## Description

### OBJECT OF THE INVENTION

The object of this invention is an oven particularly characterized because it incorporates a turning drum actuated by the corresponding transmission mechanism linked to one of its ends, which features the possibility of gaining access to the oven without having to open its door, introducing the foodstuffs through an oven load opening leading to a gap practiced onto the drum, being the foodstuffs uniformly warmed up inside the fore mentioned drum for a given turning direction and later discharged in the opposite drum turning direction from that opening towards the oven unload opening.

### BACKGROUND OF THE INVENTION

The large ovens used to cook foodstuffs that feature the incorporation of a number of trays upon which are placed the foodstuffs to be warmed up are already well known. The high temperatures reached inside the oven and the time of continuous permanence within it allow the foodstuffs introduced therein to be cooked, although said cooking is not often uniform as, depending on where the heat producing units are located, the different foodstuff sectors shall warm up to different temperatures.

The need to have available an oven in which said need for superficial and internal warming uniformity of each one of the foodstuffs contained therein gives rise to the construction of a type of oven that incorporate a turning drum or barrel within them that shall allow through their movement the displacement of the foodstuffs within, uniformly exposing each one of the sectors of their surface to the oven heat sources.

To gain access to these drums it is necessary to open the oven gate, as well as to actuate the opening means of the drum itself with the resulting inconvenient that this causes, as it shall require that the oven temperature be the proper one to be able to handle the drum located therein, as well as of the foodstuffs within, whether for their introduction or extraction from the oven.

### DESCRIPTION OF THE INVENTION

This invention is applicable for the uniform warming up of foodstuffs such as potatoes, chickpeas, almonds, etc., having been specially designed to solve the previously mentioned inconveniences through the incorporation of a drum with a special geometrical configuration located cross sectionally within the oven and fundamentally characterized because it has a lengthwise gap along its surface through which foodstuffs are loaded and unloaded without requiring the incorporation of opening and closing elements, further doing away with the need to handle the oven door in order to gain access to the drum, remaining housed within the drum the foodstuffs in a given turning direction and being unloaded thereof in the opposite turning direction.

The drum has a tubular configuration in the shape of coplanar spiral of a single thread, with its external edge slightly protruding in respect of the internal edge, defining between them a gap that runs lengthwise along the whole body of the drum and through which the foodstuffs are loaded and unloaded.

Should the turning direction of the drum coincide with the direction of the line defining the spiral between its internal and external edges, the foodstuffs introduced inside the drum do not come out, given that the foodstuffs travel traversing the inside of the drum in its displacement towards the internal edge from which they fall again towards the internal drum contact surface, to initiate once again the same journey.

In the opposite case, which is to say, should the turning direction of the drum be opposite to the direction of the line defining the spiral between its internal and external edges, the foodstuffs then tend to move towards the opening defined between the fore mentioned edges, unloading the foodstuffs whenever the external edge is oriented downwards.

The drum is located upon two bearings linked by their ends to the oven frame, being actuated through one of its ends by way of a variable turning direction ctorized reducer.

The oven incorporates a loading opening in the upper sector of the frame for the introduction of foodstuffs that are directed towards the drum gap, and another opening to unload the foodstuffs in the lower sector of the frame arranged opposite to the orientation of the gap of the drum directed downwards.

In a lower arrangement in respect of the unloading opening of the oven is a deposit accessible from the outside upon which fall the foodstuffs falling off the drum once they have been cooked. It may be easily observed that through the use of this system it is not necessary to open the door to introduce or remove foodstuffs from the oven.

### DRAWINGS DESCRIPTION

In order to complement the description that is being effected and so as to aid a better understanding of the characteristics of the invention, this patent specification includes, as an integral part thereof, a set of drawings in which with merely illustrative and not limitative character the following has been represented:

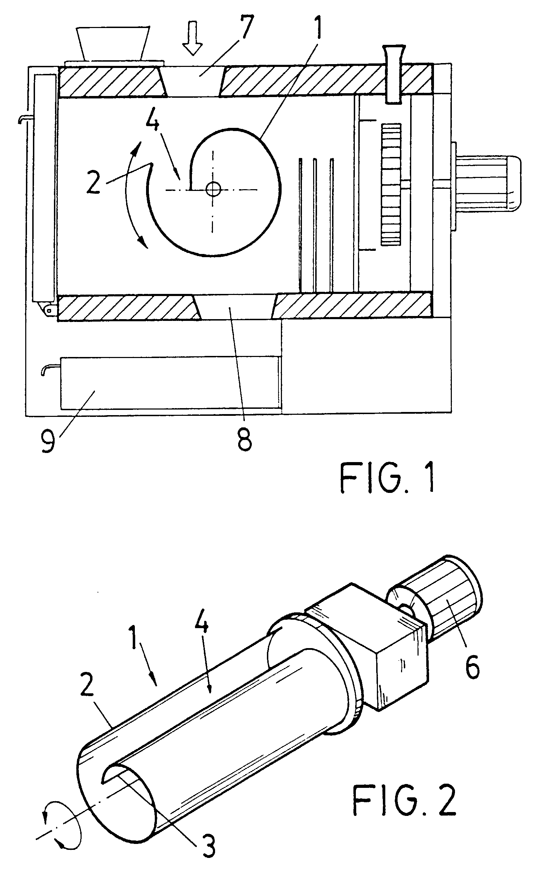

Figure 1.- Shows a schematic view of the oven with the drum internally arranged.

Figure 2.- Shows a perspective view of the drum and the motorized reduced linked at one of its ends.

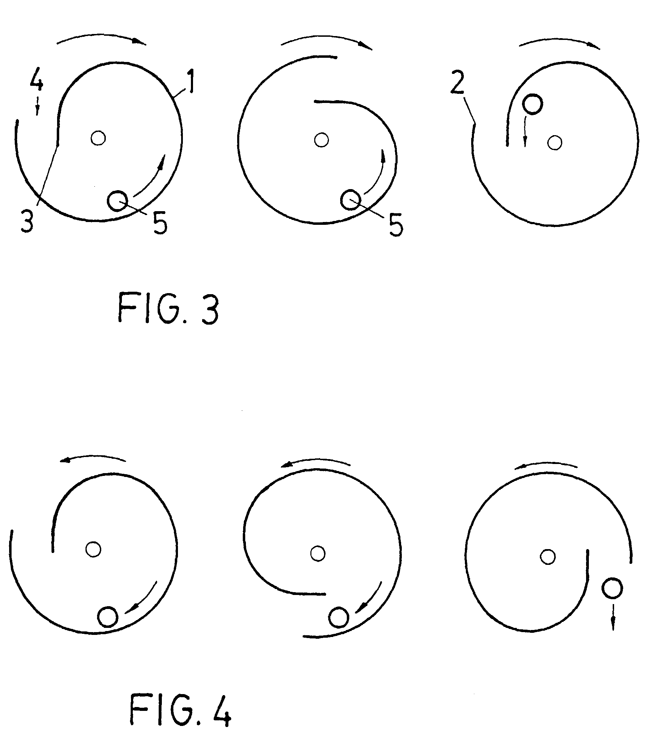

Figure 3.- Shows a side view of the various positions of the drum and of the foodstuffs contained therein for its clockwise turning direction in the warming up operation.

Figure 4.- Shows a side view of the various positions of the drum and of the foodstuffs contained therein for its anticlockwise turning direction in the unloading operation.

### PREFERRED EXECUTION OF THE INVENTION

With the help of the above listed figures there is now a description made of a preferred execution of the turning drum oven where it is shown that the oven is made up of a single thread coplanar spiral shaped lateral section tubular configuration turning drum (1), slightly overlapping the external edge (2) to the internal edge (3), and upon which is defined a lengthwise gap (4) running along the whole drum (1) and through which are loaded the foodstuffs (5) to be cooked and the later unloading of the already cooked foodstuffs.

Foodstuffs cooking stages I, II, and III show the movement of the foodstuffs (5) contained within the drum and further the movement of the drum itself (1), for a turning direction of the drum coinciding with the direction of the line defining the spiral between its internal edge (3) and its external edge (2), where it may be observed that the foodstuffs make a journey in the direction opposite the turning direction and do not exit the drum (1).

In stages IV, V and VI, after the foodstuffs have been cooked, and so as to effect their unload from the drum, is shown the movement of the foodstuffs and of the drum itself (1), showing the drum turning direction opposite the direction of the line defining the spiral between its internal edge (3) and its external edge (2).

The drum (1) is actuated through one of its ends using a bi-directional motorized reducer (6), incorporating bearings at the two ends of said drum to act as elements to hold the drum (1) in place upon the oven frame.

The oven is fitted with an upper loading opening (7) through which the drum (1) is supplied with the foodstuffs to be cooked in the position on front of the gap (3) oriented towards the load opening (7), the oven is furthermore fitted with a lower unloading opening (8) through which exit the foodstuffs already cooked when in the position facing the gap (3) oriented downwards.

In correspondence with the unload opening (8) is housed a deposit (9) within which are stored any foodstuffs fallen from the drum (1), being this deposit capable of being removed to empty the foodstuffs.

It is not considered necessary to extend this description any further in order to enable any expert in the art to understand the scope of the invention and the advantages derived therefrom.

The materials, shape, size and arrangement of the elements may be varied whenever and as long as said variation does not alter the essenciality of the invention.

The description terms used in this specification shall always be interpreted in a wide and non limitative sense.

## Claims

1. Oven with a turning drum characterized because it incorporates a single thread coplanar spiral shaped lateral section tubular configuration turning drum (1), slightly overlapping the external edge (2) to the internal edge (3), and upon which is defined a lengthwise gap (4) running along the whole drum (1) and through which are loaded the foodstuffs (5) to be cooked and the later unloading of the already cooked foodstuffs.

2. Oven with a turning drum as per the foregoing claim characterized because the drum is capable of turning in a turning direction that coincides with the direction of the line that defines the spiral between its internal edge (3) and its external edge (2) during the foodstuffs cooking operation without getting to the point when they exit the drum (1).

3. Oven with a turning drum as per claim 1 characterized because the drum (1) is capable of turning in a turning direction opposite the direction of the line that defines the spiral between its internal edge (3) and its external edge (2) after cooking the foodstuffs and in the foodstuffs drum (1) discharge operation.

4. Oven with a turning drum as per the foregoing claims characterized because the drum (1) is actuated at one of its ends through a bi-directional motorized reducer (6) incorporating bearings at the two ends of said drum as elements to hold the drum (1) in place upon the oven frame.

5. Oven with a turning drum as per claims 1, 2 and 3 characterized because the oven has an upper load opening (7) through which the drum (1) is filled with the foodstuffs to be cooked, in the position in which the feeding opening (7) is in front of the gap (3) oriented upwards.

6. Oven with a turning drum as per claims 1, 2 and 3 characterized because the oven has a lower load opening (8) through which exit the already cooked foodstuffs, in the position in which the feeding opening (8) is in front of the gap (3) oriented downwards.

7. Oven with a turning drum as per claim 6 characterized because in correspondence with the unload opening (8) is housed a deposit (9) in which are stored the foodstuffs fallen off the drum (1), being said deposit capable of being removed from the oven so that it may be emptied of foodstuffs.
